# EUROPEAN PATENT SPECIFICATION

(11) **EP 3 450 503 B1**
(45) Date of publication and mention of the grant of the patent: **30.03.2022**
(21) Application number: 17789666.9
(22) Date of filing: 27.04.2017
(51) Int. Cl.: C08L 71/03, B32B 1/08, B32B 27/00, C08K 3/00, C08K 5/00, C08K 5/34, C08L 63/00, F16L 11/10

(54) **COMPOSITION FOR LAMINATES**
ZUSAMMENSETZUNG FÜR LAMINATE
COMPOSITION POUR STRATIFIÉS

(30) Priority: 28.04.2016 JP 2016091689
(43) Date of publication of application: 06.03.2019
(73) Proprietor: Osaka Soda Co., Ltd., Osaka-shi, Osaka 550-0011 (JP)
(72) Inventor: IMAOKA,Tsuyoshi, Osaka-shi Osaka 550-0011 (JP); FUNAYAMA,Toshiyuki, Osaka-shi Osaka 550-0011 (JP); OZAKI,Taro, Osaka-shi Osaka 550-0011 (JP); HARADA,Tomonori, Osaka-shi Osaka 550-0011 (JP)
(74) Representative: Cabinet Beau de Loménie
(86) International application number: PCT/JP2017/016745
(87) International publication number: WO 2017/188384

(56) References cited:
- EP-A1- 1 975 196
- EP-A1- 2 639 059
- WO-A1-2015/056593
- JP-A- H0 366 750
- JP-A- 2004 143 255
- JP-A- 2008 266 558
- JP-A- 2012 125 960
- JP-A- 2014 031 449

## Description

### TECHNICAL FIELD

The present invention relates to a composition for laminates.

### BACKGROUND ART

In recent years, the regulations on exhaust gases from automobiles have become very strict. Among the regulations, gasoline evaporation regulations have been tightened more and more centering on the United States of America. In the field of automotive fuel hoses, in response to the strict requirements, the development of a fuel hose having all of thermal aging resistance, weather resistance, sour gasoline resistance, alcohol-containing gasoline resistance, gasoline impermeability and the like has been promoted. As one of materials for the fuel hose, a fluorine-containing polymer can be mentioned. A fluorine-containing polymer is expensive and has a problem with cold resistance. Thus, a laminate in which a fluorine-containing polymer thin film is used as an inner layer and an epichlorohydrin rubber is used as an outer layer has been used frequently.

In the case of a laminate hose composed of different polymer compositions as mentioned above, however, the adhesiveness between hoses is most critical. It is generally known that a fluorine-containing polymer has poor adhesiveness to another types of polymers. Therefore, such a measure that a type of additive is added to a polymer composition, for example, has been commonly taken. In the case of a laminate of a fluorine-containing polymer layer and an epichlorohydrin rubber layer, it is possible to adhere the fluorine-containing polymer layer to the epichlorohydrin rubber layer by employing the techniques disclosed in Patent Documents 1 to 3. In recent years, however, the extension of a service life for the purpose of achieving maintenanceless or the change or unification of materials for the purpose of optimizing adaptive members has been performed, and a laminate in which another various rubbers and various low-gas-permeable materials are tightly adhered to each other has been demanded.

The present inventors already disclose Patent Document 4 as a composition that can be used in a laminate. However, there is still a room for improvement in adhesiveness during the immersion in a fuel, and further studies on such a composition have been demanded.

### PRIOR ART DOCUMENTS-PATENT DOCUMENTS

Patent Document 1: JP-A-64-11180
Patent Document 2: JP-A-9-85898
Patent Document 3: JP-A-2006-306053
Patent Document 4: JP-5818169

Patent Document: EP 1 975 196 which relates on the preparation of polymer rubbers for forming a hose, without using nickel compounds.

### SUMMARY OF THE INVENTION

### PROBLEMS TO BE SOLVED BY THE INVENTION

The purpose of the present invention is to provide: a composition for laminates, which can be used for a laminate having excellent adhesiveness during the immersion in a fuel; a laminate produced using the composition for laminates; and a tube or hose composed of the laminate.

### MEANS FOR SOLVING THE PROBLEMS

The composition for laminates according to the present invention is characterized by containing: (a) an epichlorohydrin polymer; (b) a compound having a vinyl group; (c) at least one compound selected from the group consisting of a 1,8-diazabicyclo(5.4.0)undecene-7 salt, a 1,5-diazabicyclo(4.3.0)-nonene-5 salt, Clean version 1,8-diazabicyclo(5.4.0)undecene-7 and 1,5-diazabicyclo(4.3.0)-nonene-5; and (d) a metal salt hydrate, wherein the metal salt hydrate (d) is a hydrate of an acetic acid salt or a sulfuric acid salt of a metal selected from aluminum, sodium, calcium, zinc, manganese, lanthanum, titanium, zirconium, iron, cobalt, nickel, magnesium and copper.

The present invention can be described as follows.
1. A composition for laminates, containing: (a) an epichlorohydrin polymer; (b) a compound having a vinyl group; (c) at least one compound selected from the group consisting of a 1,8-diazabicyclo(5.4.0)undecene-7 salt, a 1,5-diazabicyclo(4.3.0)-nonene-5 salt, 1,8-diazabicyclo(5.4.0)undecene-7 and 1,5-diazabicyclo(4.3.0)-nonene-5; and (d) a metal salt hydrate, wherein the metal salt hydrate (d) is a hydrate of an acetic acid salt or a sulfuric acid salt of a metal selected from aluminum, sodium, calcium, zinc, manganese, lanthanum, titanium, zirconium, iron, cobalt, nickel, magnesium and copper.
2. The composition for laminates according to 1, wherein the compound (b) has at least two vinyl groups in the molecule.
3. The composition for laminates according to 1 or 2, wherein the content of the compound (d) is 0.1 to 10 parts by weight relative to 100 parts by weight of the epichlorohydrin polymer (a).
4. The composition for laminates according to any one of 1 to 3, further containing an epoxy resin (e).
5. The composition for laminates according to any one of 1 to 4, further containing a copper salt (f).
6. The composition for laminates according to any one of 1 to 5, further containing a vulcanizing agent (g).
7. The composition for laminates according to 6, wherein the vulcanizing agent (g) contains at least one vulcanizing agent selected from a quinoxaline-type vulcanizing agent, a thiourea-type vulcanizing agent, a mercaptotriazine-type vulcanizing agent, a bisphenol-type vulcanizing agent, a sulfur-containing vulcanizing agent and a peroxide-type vulcanizing agent.
8. The composition for laminates according to any one of 1 to 7, wherein the content of the compound (c) is 0.3 to 3.0 parts by weight relative to 100 parts by weight of the epichlorohydrin polymer.
9. A laminate produced using a composition for laminates as recited in any one of 1 to 8.
10. A tube or hose composed of a laminate as recited in 9.
11. An automotive fuel pipeline composed of a tube or hose as recited in 10.

### EFFECT OF THE INVENTION

A laminate produced using the composition for laminates according to the present invention has excellent adhesiveness during the immersion in a fuel, and a tube or hose composed of the laminate is useful as an automotive fuel pipeline.

### MODE FOR CARRYING OUT THE INVENTION

The composition for laminates according to the present invention contains at least: (a) an epichlorohydrin polymer; (b) a compound having a vinyl group; (c) at least one compound selected from the group consisting of a 1,8-diazabicyclo(5.4.0)undecene-7 salt, a 1,5-diazabicyclo(4.3.0)-nonene-5 salt, 1,8-diazabicyclo(5.4.0)undecene-7 and 1,5-diazabicyclo(4.3.0)-nonene-5; and (d) a metal salt hydrate, wherein the metal salt hydrate (d) is a hydrate of an acetic acid salt or a sulfuric acid salt of a metal selected from aluminum, sodium, calcium, zinc, manganese, lanthanum, titanium, zirconium, iron, cobalt, nickel, magnesium and copper.

The epichlorohydrin polymer (a) to be used in the composition for laminates according to the present invention is a polymer having an epichlorohydrin-derived constituent unit, and may also contain a constituent unit derived from an alkylene oxide such as ethylene oxide, propylene oxide and n-butylene oxide or a constituent unit derived from a glycidyl compound such as methyl glycidyl ether, ethyl glycidyl ether, n-glycidyl ether, allyl glycidyl ether and phenyl glycidyl ether. Specific examples of the epichlorohydrin polymer (a) include an epichlorohydrin homopolymer, an epichlorohydrin-ethylene oxide copolymer, an epichlorohydrin-propylene oxide copolymer, an epichlorohydrin-ethylene oxide-allyl glycidyl ether ternary copolymer and an epichlorohydrin-ethylene oxide-propylene oxide-allyl glycidyl ether quaternary copolymer, and an epichlorohydrin homopolymer, an epichlorohydrin-ethylene oxide copolymer and an epichlorohydrin-ethylene oxide-allyl glycidyl ether ternary copolymer are preferred. The molecular weight of each of the homopolymers and the copolymers is not particularly limited, and is generally ML₁₊₄ (100°C) of about 30 to 150 in terms of a Mooney viscosity. These homopolymer and copolymers may be used singly, or two or more of them may be used in combination.

From the viewpoint of heat resistance, the epichlorohydrin polymer (a) preferably contains an epichlorohydrin-based polymerization unit in an amount of 10 mol% or more, more preferably 20 mol% or more, particularly preferably 25 mol% or more. The content of the epichlorohydrin-based polymerization unit can be calculated on the basis of a chlorine content or the like. The chlorine content can be determined by a potentiometric titration method in accordance with a method described in JIS K7229.

In the case of an epichlorohydrin-(ethylene oxide) copolymer, the lower limit of the content of the epichlorohydrin-based polymerization unit is preferably 10 mol% or more, more preferably 20 mol% or more, particularly preferably 25 mol% or more, and the upper limit of the content of the epichlorohydrin-based polymerization unit is preferably 95 mol% or less, more preferably 75 mol% or less, particularly preferably 65 mol% or less. The lower limit of the content of the polymerization unit based on ethylene oxide is preferably 5 mol% or more, more preferably 25 mol% or more, particularly preferably 35 mol% or more, and the upper limit of the content of the polymerization unit based on ethylene oxide is preferably 90 mol% or less, more preferably 80 mol% or less, particularly preferably 75 mol% or less.

In the case of an epichlorohydrin-(ethylene oxide)-(allyl glycidyl ether) ternary copolymer, the lower limit of the content of the epichlorohydrin-based polymerization unit is preferably 10 mol% or more, more preferably 20 mol% or more, particularly preferably 25 mol% or more, and the upper limit of the content of the epichlorohydrin-based polymerization unit is preferably 95 mol% or less, more preferably 75 mol% or less, particularly preferably 65 mol% or less. The lower limit of the content of the polymerization unit based on ethylene oxide is preferably 4 mol% or more, more preferably 24 mol% or more, particularly preferably 34 mol% or more, and the upper limit of the content of the polymerization unit based on ethylene oxide is preferably 89 mol% or less, more preferably 79 mol% or less, particularly preferably 74 mol% or less. The lower limit of the content of the polymerization unit based on allyl glycidyl ether is preferably 1 mol% or more, and the upper limit of the content of the polymerization unit based on allyl glycidyl ether is preferably 10 mol% or less, more preferably 8 mol% or less, particularly preferably 7 mol% or less.

The copolymerization composition of each of the epichlorohydrin-(ethylene oxide) copolymer and the epichlorohydrin-(ethylene oxide)-(allyl glycidyl ether) ternary copolymer can be determined on the basis of a chlorine content or an iodine value.

A chlorine content can be measured by a potentiometric titration method in accordance with the method described in JIS K7229. The molar fraction of the epichlorohydrin-based constituent unit can be calculated from the chlorine content thus obtained.

An iodine value can be measured by the method in accordance with JIS K6235, and the molar fraction of the constituent unit based on allyl glycidyl ether can be calculated from the iodine value thus obtained.

The molar fraction of the constituent unit based on ethylene oxide can be calculated from the molar fraction of the epichlorohydrin-based constituent unit and the molar fraction of the constituent unit based on allyl glycidyl ether.

The compound (b) having a vinyl group to be used in the composition for laminates according to the present invention may be any compound, as long as the compound has a vinyl group, and a compound having an allyl group and a compound having a (meth)acryloyl group can be exemplified. The compound (b) having a vinyl group preferably has at least two vinyl groups (e.g., allyl groups, (meth)acryloyl groups) in the molecule, more preferably has two to five vinyl groups (e.g. , allyl groups, (meth) acryloyl groups) , particularly preferably has two to four vinyl groups (e.g., allyl groups, (meth)acryloyl groups). From the viewpoint of the improvement in adhesiveness of a laminate that is to be finally produced, a compound having an allyl group is preferably used as the compound (b) having a vinyl group. In this regard, a (meth)acryloyl group refers to an acryloyl group and/or a methacryloyl group.

Examples of the compound having a vinyl group include: a monovinyl ether compound, including an alkyl vinyl ether such as methyl vinyl ether, ethyl vinyl ether and n-propyl vinyl ether, an alkoxy alkyl vinyl ether such as ethoxy methyl vinyl ether, 2-methoxy ethyl vinyl ether, 2-ethoxy ethyl vinyl ether and 2-butoxy ethyl vinyl ether, and a hydroxyalkyl vinyl ether such as 3-hydroxypropyl vinyl ether and 4-hydroxybutyl vinyl ether; a divinyl ether compound, such as divinyl ether, ethylene glycol divinyl ether, diethylene glycol divinyl ether and triethylene glycol divinyl ether; a trivinyl ether compound, such as trimethylolpropane trivinyl ether and pentaerythritol trivinyl ether; and a tetravinyl ether compound such as pentaerythritol tetravinyl ether and ditrimethylolpropane tetravinyl ether.

The compound having an allyl group is preferably an allyl ester, an allyl ether, an allylamine, an allyl cyanurate, an allyl isocyanurate, an allyl thioether or an allyl onium, more preferably a polyfunctional allyl ester, a polyfunctional allyl ether, a polyfunctional allylamine, a polyfunctional cyanurate, a polyfunctional isocyanurate or a polyfunctional allyl thioether which is a compound having at least two allyl groups in the molecule, particularly preferably a polyfunctional allyl ester, a polyfunctional cyanurate or a polyfunctional isocyanurate.

As the polyfunctional allyl ester, a polyfunctional allyl ester selected from an aliphatic polyfunctional allyl ester, an alicyclic polyfunctional allyl ester and an aromatic polyfunctional allyl ester can be used. The allyl ester selected from an aliphatic polyfunctional allyl ester, an alicyclic polyfunctional allyl ester and an aromatic polyfunctional allyl ester may be used singly, or two or more of the allyl esters may be used in combination. In this regard, a "polyfunctional allyl ester" refers to a compound having at least two allyl ester groups (-COOCH₂-CH=CH₂ groups), an "aliphatic polyfunctional allyl ester" refers to a compound having an aliphatic hydrocarbon group and at least two allyl ester groups, an "alicyclic polyfunctional allyl ester" refers to a compound having an alicyclic hydrocarbon group and at least two allyl ester groups, and an "aromatic polyfunctional allyl ester" refers to a compound having an aromatic hydrocarbon group and at least two allyl ester groups. In the description, the term "aliphatic polyfunctional allyl ester" is a concept including a diallyl oxalate which has two allyl ester groups bonded directly thereto.

Specific examples of the aliphatic polyfunctional allyl ester include diallyl oxalate, diallyl malonate, diallyl succinate, diallyl glutarate, diallyl adipate, diallyl pimelate, diallyl suberate, diallyl azelate, diallyl sebacate, diallyl fumarate, diallyl maleate, triallyl citrate, diallyl itaconate and tetraallyl 1,2,3,4-butanetetracarboxylate.

Specific examples of the alicyclic polyfunctional allyl ester include diallyl cyclobutanedicarboxylate, diallyl cycloheptanedicarboxylate, diallyl cyclohexanedicarboxylate (diallyl hexahydrophthalate), diallyl norbornanedicarboxylate, diallyl cyclobutenedicarboxylate, diallyl cycloheptenedicarboxylate, diallyl cyclohexenedicarboxylate (diallyl tetrahydrophthalate), diallyl norbornenedicarboxylate, 3-methyl-hexahydro-1,2-diallyl phthalate, 4-methyl-hexahydro-1,2-diallyl phthalate, 3-methyl-1,2,3,6-tetrahydro-1,2-diallyl phthalate, 4-methyl-1,2,3,6-tetrahydro-1,2-diallyl phthalate, 3,6-endomethylene-3-methyl-1,2,3,6-tetrahydro-1,2-diallyl phthalate, 3,6-endomethylene-4-methyl-1,2,3,6-tetrahydro-1,2-diallyl phthalate, diallyl 4-cyclohexene-1,2-dicarboxylate, diallyl 2-cyclohexene-1,2-dicarboxylate and tetraallyl 1,2,3,4-butanetetracarboxylate. Among these compounds, diallyl 1,2-cyclohexanedicarboxylate, diallyl 1,3-cyclohexanedicarboxylate, diallyl 1,4-cyclohexanedicarboxylate, and diallyl norbornanedicarboxylate are preferred.

Specific examples of the aromatic polyfunctional allyl ester include diallyl phthalate (diallyl orthophthalate, diallyl isophthalate, diallyl terephthalate), triallyl trimesate, triallyl trimellitate, tetraallyl pyromellitate, hexaallyl benzenehexacarboxylate, hexaallyl mellitate and 1,3,5,7-tetraallyl naphthalene. Among these compounds, triallyl trimesate and diallyl phthalate are preferred.

The polyfunctional allyl ether refers to a compound having at least two allyl ether groups (-O-CH₂-CH=CH₂ groups), and specific examples of the polyfunctional allyl ether include ethylene glycol diallyl ether, diethylene glycol diallyl ether, polyethylene glycol diallyl ether, propylene glycol diallyl ether, butylene glycol diallyl ether, hexanediol diallyl ether, a bisphenol A alkylene oxide diallyl ether, a bisphenol F alkylene oxide diallyl ether, trimethylolpropane triallyl ether, ditrimethylolpropane tetraallyl ether, glycerin triallyl ether, pentaerythritol tetraallyl ether, dipentaerythritol pentaallyl ether, dipentaerythritol hexaallyl ether, polyethylene glycol diallyl ether, pentaerythritol diallyl ether, pentaerythritol triallyl ether, pentaerythritol tetraallyl ether, 1,4-diallyloxymethylbenzene, ethylene oxide-added trimethylolpropane triallyl ether, ethylene oxide-added ditrimethylolpropane tetraallyl ether, ethylene oxide-added pentaerythritol tetraallyl ether and ethylene oxide-added dipentaerythritol hexaallyl ether. Among these compounds, polyethylene glycol diallyl ether is preferred.

The polyfunctional allylamine refers to an amine having at least two allyl groups (-CH₂-CH=CH₂ groups), and is preferably an amine that has, as the backbone thereof, an alicyclic or bialicyclic compound having -NH-CO-NH- and also has at least two allyl groups (-CH₂-CH=CH₂ groups), more preferably an amine that has a glycoluril backbone and also has at least two allyl groups (-CH₂-CH=CH₂ groups). Specific examples of the polyfunctional allylamine include diallylamine, diallylmethylamine, diallylethylamine, triallylamine and 1,3,4,6-tetraallyl glycoluril.

The polyfunctional allyl cyanurate is a compound having an allyl group and a cyanuric acid backbone, and specific examples of the polyfunctional allyl cyanurate include allyl cyanurate, diallyl cyanurate and triallyl cyanurate.

The polyfunctional allyl isocyanurate is a compound having an allyl group and an isocyanuric acid backbone, and specific examples of the polyfunctional allyl isocyanurate include allyl isocyanurate, diallyl isocyanurate and triallyl isocyanurate.

The polyfunctional allyl thioether is a compound having at least two allyl groups (-CH₂-CH=CH₂ groups) and a thioether structure, and a specific example of the polyfunctional allyl thioether is an alkylene glycol diallyl thioether.

The allyl onium includes a monofunctional allyl onium, a polyfunctional allyl onium and the like, and specific examples of the allyl onium include a monoallyl trialkyl ammonium salt, a diallyl dialkyl ammonium salt and a triallyl monoalkyl ammonium salt, and further include a chloride, a bromide, an iodide and the like of these salts.

As the compound having an allyl group, the following compounds are preferred: a diallyl compound such as diallyl terephthalate, diallyl orthophthalate, diallyl isophthalate, diallyl naphthalate, trimethylolpropane diallyl ether, pentaerythritol diallyl ether, bisphenol A diallyl ether, bisphenol F diallyl ether, propylene glycol diallyl ether, glycerin diallyl ether, diallyl 1,2-cyclohexane dicarboxylate, diallyl 1,3-cyclohexanedicarboxylate and diallyl 1,4-cyclohexanedicarboxylate; and a triallyl compound such as triallyl cyanurate, triallyl isocyanurate, triallyl trimellitate, triallyl trimesate, trimethylolpropane triallyl ether and pentaerythritol triallyl ether.

Specific examples of the compound having a (meth) acryloyl group include: a mono(meth)acrylate including an alkyl (meth)acrylate such as butyl (meth)acrylate, lauryl (meth)acrylate, stearyl (meth)acrylate, 2-ethylhexyl (meth)acrylate, tetrahydrofurfuryl (meth)acrylate and hydroxyethyl (meth)acrylate, and an alkoxyalkyleneglycol (meth)acrylate such as methoxypropyleneglycol (meth)acrylate and ethoxydiethyleneglycol (meth)acrylate; a difunctional (meth)acrylate including an alkyleneglycol di(meth)acrylate such as neopentylglycol di(meth)acrylate and polyethyleneglycol di(meth)acrylate, and an alkylenediol di(meth)acrylate such as dipropyleneglycol di(meth)acrylate, tripropyleneglycol di(meth)acrylate, 1,6-hexanediol di(meth)acrylate and 1,9-nonanediol di(meth)acrylate; a trifunctional (meth)acrylate such as trimethylolpropane tri(meth)acrylate, pentaerythritol tri(meth)acrylate ethylene oxide and propylene oxide-modified trimethylolpropane triacrylate; and a tetrafunctional (meth)acrylate such as pentaerythritol tetra(meth)acrylate and ditrimethylolpropane tetra(meth)acrylate.

The amount of the compound (b) to be added in the composition for laminates according to the present invention is preferably 1 to 20 parts by weight, more preferably 2 to 15 parts by weight, particularly preferably 3 to 10 parts by weight, relative to 100 parts by weight of the epichlorohydrin polymer (a) .

The composition for laminates according to the present invention contains at least one compound (c) selected from the group consisting of a 1,8-diazabicyclo(5.4.0)undecene-7 salt, a 1,5-diazabicyclo(4.3.0)-nonene-5 salt, 1,8-diazabicyclo(5.4.0)undecene-7 (also referred to as "DBU", hereinbelow) and 1,5-diazabicyclo(4.3.0)-nonene-5 (also referred to as "DBN", hereinbelow).

Specific examples of the compound (c) include 1,8-diazabicyclo(5.4.0)undecene-7 p-toluenesulfonic acid salt, 1,8-diazabicyclo(5.4.0)undecene-7 phenol salt, 1,8-diazabicyclo(5.4.0)undecene-7 phenolic resin salt, 1,8-diazabicyclo(5.4.0)undecene-7 orthophthalic acid salt, 1,8-diazabicyclo(5.4.0)undecene-7 formic acid salt, 1,8-diazabicyclo(5.4.0)undecene-7 octylic acid salt, 1,8-diazabicyclo(5.4.0)undecene-7 carbonic acid salt, 1,8-diazabicyclo(5.4.0)undecene-7 stearic acid salt, 1,8-diazabicyclo(5.4.0)undecene-7 2-ethylhexanoic acid salt, 1,8-diazabicyclo(5.4.0)undecene-7 benzoic acid salt, 1,8-diazabicyclo(5.4.0)undecene-7 salicylic acid salt, 1,8-diazabicyclo(5.4.0)undecene-7 3-hydroxy-2-naphthoic acid salt, 1,8-diazabicyclo(5.4.0)undecene-7 2-mercaptobenzothiazole salt, 1,8-diazabicyclo(5.4.0)undecene-7 2-mercaptobenzimidazole salt, 1,5-diazabicyclo(4.3.0)-nonene-5 p-toluenesulfonic acid salt, 1,5-diazabicyclo(4.3.0)-nonene-5 phenol salt, 1,5-diazabicyclo(4.3.0)-nonene-5 phenolic resin salt, 1,5-diazabicyclo(4.3.0)-nonene-5 orthophthalic acid salt, 1,5-diazabicyclo(4.3.0)-nonene-5 formic acid salt, 1,5-diazabicyclo(4.3.0)-nonene-5 octylic acid salt, 1,5-diazabicyclo(4.3.0)-nonene-5 carbonic acid salt, 1,5-diazabicyclo(4.3.0)-nonene-5 stearic acid salt, 1,5-diazabicyclo(4.3.0)-nonene-5 2-ethylhexanoic acid salt, 1,5-diazabicyclo(4.3.0)-nonene-5 benzoic acid salt, 1,5-diazabicyclo(4.3.0)-nonene-5 salicylic acid salt, 1,5-diazabicyclo(4.3.0)-nonene-5 3-hydroxy-2-naphthoic acid salt, 1,5-diazabicyclo(4.3.0)-nonene-5 2-mercaptobenzothiazole salt, 1,5-diazabicyclo(4.3.0)-nonene-5 2-mercaptobenzimidazole salt, 1,8-diazabicyclo(5.4.0)undecene-7, and 1,5-diazabicyclo(4.3.0)-nonene-5.

The compound (c) is preferably at least one compound selected from the group consisting of 1,8-diazabicyclo(5.4.0)undecene-7 p-toluenesulfonic acid salt, 1,8-diazabicyclo(5.4.0)undecene-7 phenol salt, 1,8-diazabicyclo(5.4.0)undecene-7 phenolic resin salt, 1,8-diazabicyclo(5.4.0)undecene-7 orthophthalic acid salt, 1,8-diazabicyclo(5.4.0)undecene-7 formic acid salt, 1,8-diazabicyclo(5.4.0)undecene-7 octylic acid salt, 1,5-diazabicyclo(4.3.0)-nonene-5 p-toluenesulfonic acid salt, 1,5-diazabicyclo(4.3.0)-nonene-5 phenol salt, 1,5-diazabicyclo(4.3.0)-nonene-5 phenolic resin salt, 1,5-diazabicyclo(4.3.0)-nonene-5 orthophthalic acid salt, 1,5-diazabicyclo(4.3.0)-nonene-5 formic acid salt, 1,5-diazabicyclo(4.3.0)-nonene-5 octylic acid salt, 1,8-diazabicyclo(5.4.0)undecene-7, and 1,5-diazabicyclo(4.3.0)-nonene-5.

From the viewpoint of the improvement in adhesiveness, the compound (c) is more preferably 1,8-diazabicyclo(5.4.0)undecene-7 phenol salt.

The amount of the compound (c) to be added in the composition for laminates according to the present invention is preferably 0.3 to 3.0 parts by weight, more preferably 0.5 to 2.0 parts by weight, particularly preferably 0.5 to 1.5 parts by weight, relative to 100 parts by weight of the epichlorohydrin polymer (a).

The metal salt hydrate (d) of the invention is a hydrate of an acetic acid salt or a sulfuric acid salt of a metal selected from aluminum, sodium, calcium, zinc, manganese, lanthanum, titanium, zirconium, iron, cobalt, nickel, magnesium and copper, more preferably a hydrate of a sulfuric acid salt and/or an acetic acid salt of a metal selected from calcium, magnesium, sodium and copper, particularly preferably calcium sulfate 1/2 hydrate, calcium sulfate dihydrate, sodium sulfate decahydrate, copper (II) sulfate pentahydrate or magnesium sulfate decahydrate.

The amount of the metal salt hydrate (d) to be added in the composition for laminates according to the present invention is 0.1 to 80 parts by weight, preferably 0.5 to 70 parts by weight, more preferably 1 to 50 parts by weight, particularly preferably 1 to 20 parts by weight, relative to 100 parts by weight of the epichlorohydrin polymer (a). It is preferred that the amount of the metal salt hydrate (d) to be added falls within these ranges, because sufficient adhesiveness can be achieved and mechanical properties cannot be deteriorated.

The composition for adhesion according to the present invention contains the epichlorohydrin polymer (a), the compound (b), the compound (c) and the metal salt hydrate (d) as the essential components, and may further contain an epoxy resin (e) as an optional component.

As the epoxy resin (e), at least one resin selected from the group consisting of, for example, a bisphenol A-type epoxy resin, a bisphenol F-type epoxy resin, a phenol novolac-type epoxy resin, an o-cresol novolac-type epoxy resin, an amine-type epoxy resin, a hydrogenated bisphenol A-type epoxy resin and a polyfunctional epoxy resin. Among these resins, a bisphenol A-type epoxy resin is preferred from the viewpoint of good chemical resistance and adhesiveness, and an epoxy resin represented by formula (1) is particularly preferred.

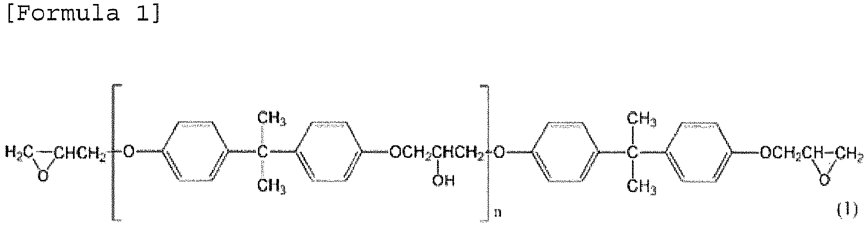

In formula (1), n represents an average value and is preferably 0.1 to 3, more preferably 0.1 to 0.5, still more preferably 0.1 to 0.3.

The amount of the epoxy resin (e) is preferably 0.1 to 5 parts by weight, more preferably 0.3 to 3 parts by weight, relative to 100 parts by weight of the epichlorohydrin polymer (a) .

In one preferred embodiment of the composition for laminates according to the present invention, the total amount of the compound (c) and the epoxy resin (e) is more than 2.0 parts by weight relative to 100 parts by weight of the epichlorohydrin polymer (a).

From the viewpoint of the improvement in adhesiveness, it is preferred that the composition for laminates further contains a copper salt (f).

As the copper salt (f), an organic copper salt is preferred. Specific examples of the organic copper salt include: a copper salt of a saturated carboxylic acid such as formic acid, acetic acid, butyric acid and stearic acid; a copper salt of an unsaturated carboxylic acid such as oleic acid and linoleic acid; a copper salt of an aromatic carboxylic acid such as salicylic acid, benzoic acid and phthalic acid; a copper salt of a dicarboxylic acid such as oxalic acid, succinic acid, adipic acid, maleic acid and fumaric acid; a copper salt of a hydroxy acid such as lactic acid and citric acid; carbamic acid copper salt; and a copper salt of a thiocarbamic acid, a sulfonic acid and the like, such as copper dimethyldithiocarbamate, copper diethyldithiocarbamate, copper dibutyldithiocarbamate, copper N-ethyl-N-phenyldithiocarbamate, copper N-pentamethylenedithiocarbamate and copper dibenzyldithiocarbamate. As the organic copper salt, a copper salt of a saturated carboxylic acid, a copper salt of an unsaturated carboxylic acid, a copper salt of an aromatic carboxylic acid and a copper salt of a thiocarbamic acid are preferred, and copper stearate, copper dimethyldithiocarbamate, copper diethyldithiocarbamate and copper dibutyldithiocarbamate are more preferred.

From the viewpoint of the improvement in adhesiveness, the amount of the copper salt (f) to be added is 0.01 to 5 parts by weight, preferably 0.05 to 3 parts by weight, more preferably 0.1 to 2 parts by weight, relative to 100 parts by weight of the epichlorohydrin polymer (a). The amount of the copper salt (f) falling within the above-mentioned ranges is preferred, because a sufficient adhesion effect can be achieved and the mechanical properties of a vulcanization product cannot be deteriorated.

In the composition for laminates according to the present invention, a vulcanizing agent (g) is contained. As the vulcanizing agent (g), a conventional known substance can be used.

As the vulcanizing agent (g), a known vulcanizing agent utilizing the reactivity of a chlorine atom, such as a polyamine-type vulcanizing agent, a thiourea-type vulcanizing agent, a thiadiazole-type vulcanizing agent, a mercaptotriazine-type vulcanizing agent, a pyrazine-type vulcanizing agent, a quinoxaline-type vulcanizing agent, a bisphenol-type vulcanizing agent and the like can be mentioned.

Specific examples of the known vulcanizing agent (g) utilizing the reactivity of a chlorine atom are as follows. Specific examples of the polyamine-type vulcanizing agent include ethylenediamine, hexamethylenediamine, diethylenetriamine, triethylenetetramine, hexamethylenetetramine, p-phenylenediamine, cumenediamine, N,N'-dicinnamylidene-1,6-hexanediamine, ethylenediamine carbamate and hexamethylenediamine carbamate.

Specific examples of the thiourea-type vulcanizing agent include ethylenethiourea, 1,3-diethylthiourea, 1,3-dibutylthiourea and trimethylthiourea.

Specific examples of the thiadiazole-type vulcanizing agent include 2,5-dimercapto-1,3,4-thiadiazole and 2-mercapto-1,3,4-thiadiazole-5-thiobenzoate.

Specific examples of the mercaptotriazine-type vulcanizing agent include 2,4,6-trimercapto-1,3,5-triazine,
2-methoxy-4,6-dimercaptotriazine,
2-hexylamino-4,6-dimercaptotriazine,
2-diethylamino-4,6-dimercaptotriazine,
2-cyclohexaneamino-4,6-dimercaptotriazine,
2-dibutylamino-4,6-dimercaptotriazine,
2-anilino-4,6-dimercaptotriazine and
2-phenylamino-4,6-dimercaptotriazine.

The pyrazine-type vulcanizing agent includes a 2,3-dimercaptopyrazine derivative and the like. Specific examples of the 2,3-dimercaptopyrazine derivative include pyrazine-2,3-dithiocarbonate,
5-methyl-2,3-dimercaptopyrazine,
5-ethylpyrazine-2,3-dithiocarbonate,
5,6-dimethyl-2,3-dimercaptopyrazine and
5,6-dimethylpyrazine-2,3-dithiocarbonate.

The quinoxaline-type vulcanizing agent includes a 2,3-dimercaptoquinoxaline derivative and the like. Specific examples of the 2,3-dimercaptoquinoxaline derivative include quinoxaline-2,3-dithiocarbonate,
6-methylquinoxaline-2,3-dithiocarbonate,
6-ethyl-2,3-dimercaptoquinoxaline,
6-isopropylquinoxaline-2,3-dithiocarbonate and
5,8-dimethylquinoxaline-2,3-dithiocarbonate.

Specific examples of the bisphenol-type vulcanizing agent include 4,4'-dihydroxydiphenyl sulfoxide,
4,4'-dihydroxydiphenylsulfone (bisphenol S),
1,1-cyclohexylidene-bis(4-hydroxybenzene),
2-chloro-1,4-cyclohexylene-bis(4-hydroxybenzene),
2,2-isopropylidene-bis(4-hydroxybenzene) (bisphenol A), hexafluoroisopropylidene-bis(4-hydroxybenzene) (bisphenol AF) and 2-fluoro-1,4-phenylene-bis(4-hydroxybenzene).

In the composition for laminates according to the present invention, it is possible to use a known vulcanization promoter and a known vulcanization retarder without any modification together with the vulcanizing agent (g). Examples of the vulcanization promoter to be used together with the known vulcanizing agent (g) utilizing the reactivity of a chlorine atom include a primary, secondary or tertiary amine, an organic acid salt of the amine or an adduct thereof, a guanidine-based promoter, a thiuram-based promoter and a dithiocarbamic acid-based promoter. Examples of the retarder include zinc salts of N-cyclohexanethiophthalimide and a dithiocarbamic acid.

Specific examples of the vulcanization promoter are as follows. As the primary, secondary or tertiary amine, a primary, secondary or tertiary amine of an aliphatic or cyclic fatty acid having 5 to 20 carbon atoms is particularly preferred, and typical examples of the amine include n-hexylamine, octylamine, dibutylamine, tributylamine and hexamethylenediamine.

Examples of the organic acid that can form a salt with the amine include a carboxylic acid, a carbamic acid, 2-mercaptobenzothiazole and dithiophosphoric acid. Examples of the substance that can form an adduct with the amine include an alcohol and an oxime. Specific examples of the organic acid salt or adduct of the amine include n-butylallylamine acetic acid salt, hexamethylenediamine carbamic acid salt and 2-mercaptobenzothiazole dicyclohexylallylamine salt.

Specific examples of the guanidine-based promoter include diphenylguanidine and ditolylguanidine.

Specific examples of the thiuram-based vulcanization promoter include tetramethylthiuram disulfide, tetramethylthiuram monosulfide, tetraethylthiuram disulfide, tetrabutylthiuram disulfide and dipentamethylenethiuram tetrasulfide.

An example of the dithiocarbamic acid-based promoter is pentamethylenedithiocarbamic acid piperidine salt.

The amount of the vulcanization promoter or retarder to be used together with the known vulcanizing agent (g) utilizing the reactivity of a chlorine atom is preferably 0 to 10 parts by weight, more preferably 0.1 to 5 parts by weight, relative to 100 parts by weight of the epichlorohydrin polymer (a).

In the case where the epichlorohydrin polymer (a) is a polymer having a double bond, such as an epichlorohydrin-allyl glycidyl ether copolymer and an epichlorohydrin-ethylene oxide-allyl glycidyl ether ternary copolymer, a known vulcanizing agent that has been used conventionally for the vulcanization of nitrile rubbers, such as a sulfur-containing vulcanizing agent, a peroxide-type vulcanizing agent, a resin-type vulcanizing agent, a quinone dioxime-type vulcanizing agent or the like, can be mentioned.

Specific examples of the sulfur-containing vulcanizing agent include sulfur, morpholine disulfide, tetramethylthiuram disulfide, tetraethylthiuram disulfide, tetrabutylthiuram disulfide,
N,N'-dimethyl-N,N'-diphenylthiuram disulfide,
dipentanemethylenethiuram tetrasulfide,
dipentamethylenethiuram tetrasulfide and
dipentamethylenethiuram hexasulfide.

Specific examples of the peroxide-type vulcanizing agent include tert-butyl hydroperoxide, p-menthane hydroperoxide, dicumyl peroxide, tert-butyl peroxide, 1,3-bis(tert-butylperoxyisopropyl)benzene, 2,5-dimethyl-2,5-di(tert-butylperoxy)hexane, benzoyl peroxide and tert-butylperoxy benzoate.

An example of the resin-type vulcanizing agent is an alkylphenol formaldehyde resin.

Examples of the quinone dioxime-type vulcanizing agent include p-quinone dioxime and p-p'-dibenzoylquinone dioxime.

Examples of the vulcanization promoter, the vulcanization retarder, the vulcanization promotion aid and the crosslinking aid to be used in combination with the sulfur-containing vulcanizing agent, the peroxide-type vulcanizing agent, the resin-type vulcanizing agent and the quinone dioxime-type vulcanizing agent include: various vulcanization promoters, such as an aldehyde ammonia-based promoter, an aldehyde amine-based promoter, a thiourea-based promoter, a guanidine-based promoter, a thiazole-based promoter, a sulfonamide-based promoter, a thiuram-based promoter, a dithiocarbamic acid salt-based promoter, and a xanthogenic acid salt-based promoter; a vulcanization retarder such as N-nitrosodiphenylallylamine, anhydrous phthalic acid and N-cyclohexylthiophthalimide; a vulcanization promotion aid such as zinc flower (zinc oxide), stearic acid and zinc stearate; and various crosslinking aids such as a quinone dioxime-based crosslinking aid, a methacrylate-based crosslinking aid, an allyl-based crosslinking aid and a maleimide-based crosslinking aid.

The amount of each of the vulcanization promoter, the vulcanization retarder, the vulcanization promotion aid and the crosslinking aid to be used in combination with the sulfur-containing vulcanizing agent, the peroxide-type vulcanizing agent, the resin-type vulcanizing agent or the quinone dioxime-type vulcanizing agent is preferably 0 to 10 parts by weight, more preferably 0.1 to 5 parts by weight, relative to 100 parts by weight of the epichlorohydrin polymer (a) .

In the composition for laminates according to the present invention, at least one vulcanizing agent selected from the group consisting of a thiourea-type vulcanizing agent, a quinoxaline-type vulcanizing agent, a sulfur-containing vulcanizing agent, a peroxide-type vulcanizing agent, a mercaptotriazine-type vulcanizing agent and a bisphenol-type vulcanizing agent is preferred, at least one vulcanizing agent selected from the group consisting of a thiourea-type vulcanizing agent, a quinoxaline-type vulcanizing agent and a bisphenol-type vulcanizing agent is more preferred, and a quinoxaline-type vulcanizing agent is particularly preferred. These vulcanizing agents (g) may be used singly, or two or more of them may be used in combination.

In the composition for laminates according to the present invention, the vulcanizing agent (g) is preferably contained in an amount of 0.1 to 10 parts by weight, more preferably 0.5 to 5 parts by weight, relative to 100 parts by weight of the epichlorohydrin polymer (a).

In the composition for laminates according to the present invention, an arbitrary rubber, such as an acrylonitrile butadiene rubber (NBR), a hydrogenated NBR (H-NBR), an acrylic rubber (ACM), an ethylene acrylic acid ester rubber (AEM), a fluororubber (FKM), a chloroprene rubber (CR), a chlorosulfonated polyethylene (CSM), a chlorinated polyethylene (CPE) and an ethylene propylene rubber (EPM, EPDM), may be contained. In this case, the amount of the rubber to be added is preferably 1 to 50 parts by weight relative to 100 parts by weight of the epichlorohydrin polymer (a).

In the composition for laminates according to the present invention, a resin other than the epoxy resin may be contained. Specific examples of the resin include a polymethyl methacrylate (PMMA) resin, a polystyrene (PS) resin, a polyurethane (PUR) resin, a polyvinyl chloride (PVC) resin, an ethylene-vinyl acetate (EVA) resin, a styrene-acrylonitrile (AS) resin and a polyethylene (PE) resin. In this case, the amount of the resin to be added is preferably 1 to 50 parts by weight relative to 100 parts by weight of the epichlorohydrin polymer (a).

In the present invention, depending on the intended use or as required, conventional additives that can be added in a common rubber composition, such as various additives including a filler, a processing aid, a plasticizer, an acid acceptor, a softening agent, an anti-aging agent, a coloring agent, a stabilizer, an adhesion aid, a mold release agent, a conductivity-imparting agent, a heat conductivity-imparting agent, a surface non-adhesive agent, a tackifier, a flexibility-imparting agent, a heat resistance improving agent, a flame-retardant agent, an ultraviolet ray absorber, an oil resistance improving agent, a foaming agent, an anti-scorching agent and a lubricant can be added, as long as the effect of the present invention cannot be impaired. At least one conventional vulcanizing agent or vulcanization promoter that is different from the above-mentioned substances may also be added.

Specific examples of the filler include: a metal sulfide such as molybdenum disulfide, iron sulfide and copper sulfide, diatomous earth, asbestos, lithopone (zinc sulfide/barium sulfide), graphite, carbon black, fluorinated carbon, fluorinated calcium, coke, a quartz fine powder, talc, a mica powder, wollastonite, carbon fibers, aramid fibers, various whiskers, glass fibers, an organic reinforcing agent and an organic filler.

Specific examples of the processing aid include: a higher fatty acid such as stearic acid, oleic acid, palmitic acid and lauric acid; a higher fatty acid salt such as sodium stearate and zinc stearate; a higher fatty acid amide such as stearic acid amide and oleic amide; a higher fatty acid ester such as ethyl oleate; a higher fatty acid amine such as stearylamine and oleylamine; a petroleum-derived wax such as carnauba wax and ceresin wax; a polyglycol such as ethylene glycol, glycerin and diethylene glycol; an aliphatic hydrocarbon such as vaseline and paraffin; and a silicone oil, a silicone polymer, a low-molecular-weight polyethylene, a phthalic acid ester, a phosphoric acid ester, rosin, a (halogenated) dialkylamine, a (halogenated) dialkylsulfone and a surfactant.

Specific examples of the plasticizer include a phthalic acid derivative and a sebacic acid derivative; specific examples of the softening agent include a lubricant oil, a process oil, coal tar, castor oil and calcium stearate; and specific examples of the anti-aging agent include a phenylenediamine compound, a phosphate compound, a quinoline compound, a cresol compound, a phenol compound and a dithiocarbamate metal salt.

The composition for laminates according to the present invention can be prepared by kneading the epichlorohydrin polymer (a), the compound (b), the compound (c), the metal salt hydrate (d), and optionally the epoxy resin (e), the copper salt (f), the vulcanizing agent (g) and other additives together.

For example, the kneading can be carried out using an open roll, a Banbury mixer, a pressure kneader or the like at a temperature equal to or lower than 100°C.

The composition for laminates according to the present invention can be used for forming a laminate of the composition and another type of polymer composition. As the method for producing the laminate, a method in which the composition for laminates and another type of polymer composition are laminated on each other and then the resultant laminate is vulcanized by heating and bonding together can be exemplified. The heating temperature is 100 to 200°C, and the vulcanization time varies depending on the temperature and is generally 0.5 to 300 minutes. As the heating method, any method can be employed, such as compression molding using a mold, injection molding and heating with steam, infrared ray or microwaves.

In the production of the laminate, chemically strong adhesion can be achieved during vulcanization without needing to carry out particularly complicated steps. Therefore, a laminate having sufficient adhesion force can be provided even when the laminate is exposed to a severe condition (e.g., immersion in a fuel oil). With respect to moldability, the molding can be performed at low cost and easily. Because the molding can be performed by a conventional method such as extrusion molding, the thickness of the laminate can be reduced and the flexibility of the laminate can also be improved.

As another polymer layer, a low-gas-permeable polymer layer is exemplified, and the low-gas-permeable polymer layer is preferably a fluorine-containing polymer layer.

Specific examples of the polymer to be used in the low-gas-permeable polymer layer include a vinylidene fluoride-hexafluoropropene binary copolymer, a tetrafluoroethylene-hexafluoropropene binary copolymer, a vinylidene fluoride-hexafluoropropene-tetrafluoroethylene ternary copolymer, a vinylidene fluoride-perfluoroalkyl vinyl ether-tetrafluoroethylene ternary copolymer, a tetrafluoroethylene-perfluoroethyl vinyl ether copolymer, a tetrafluoroethylene-perfluoropropyl vinyl ether copolymer, a tetrafluoroethylene-perfluoroalkyl vinyl ether-chlorotrifluoro ternary copolymer, a tetrafluoroethylene-propylene binary copolymer, a vinylidene fluoride-tetrafluoroethylene-tetrafluoroethylene ternary copolymer, an ethylene-tetrafluoroethylene binary copolymer, polyvinylidene fluoride, polytetrafluoroethylene, polychlorotrifluoroethylene (PCTFE), a chlorotrifluoroethylene (CTFE) copolymer, a polyvinylidene chloride resin, a polyvinyl alcohol resin, an ethylene-vinyl alcohol copolymer resin, a nylon resin, a polyacrylonitrile resin and a polyester resin, and the polymer is preferably a vinylidene fluoride-hexafluoropropene binary copolymer, a tetrafluoroethylene-hexafluoropropene binary copolymer, a vinylidene fluoride-hexafluoropropene-tetrafluoroethylene ternary copolymer, a vinylidene fluoride-perfluoroalkyl vinyl ether-tetrafluoroethylene ternary copolymer, a tetrafluoroethylene-perfluoroethyl vinyl ether copolymer, a tetrafluoroethylene-perfluoropropyl vinyl ether copolymer, a tetrafluoroethylene-perfluoroalkyl vinyl ether-chlorotrifluoro ternary copolymer, a tetrafluoroethylene-propylene binary copolymer, a vinylidene fluoride-tetrafluoroethylene-tetrafluoroethylene ternary copolymer, an ethylene-tetrafluoroethylene binary copolymer, a polyvinylidene fluoride, a polytetrafluoroethylene, a PCTFE or a chlorotrifluoroethylene (CTFE) copolymer, particularly preferably a chlorotrifluoroethylene (CTFE) copolymer.

It is preferred that the CTFE copolymer contains a CTFE-derived copolymerization unit (a CTFE unit) and a copolymerization unit derived from at least one monomer selected from the group consisting of tetrafluoroethylene (TFE), hexafluoropropylene (HFP), a perfluoro(alkyl vinyl ether) (PAVE), vinylidene fluoride (VdF), vinyl fluoride, hexafluoroisobutene, a monomer represented by formula:

CH₂=CX¹(CF₂)ₙX²

(wherein X¹ represents H or F; X² represents H, F or Cl; and n represents an integer of 1 to 10)
ethylene, propylene, 1-butene, 2-butene, vinyl chloride, and vinylidene chloride. The CTFE copolymer is more preferably a perhalopolymer.

It is more preferred that the CTFE copolymer contains a CTFE unit and a copolymerization unit derived from at least one monomer selected from the group consisting of TFE, HFP and PAVE, and it is still more preferred that the CTFE copolymer is composed of substantially only these copolymerization units. From the viewpoint of low fuel permeability, it is preferred that a monomer having a CH bond, such as ethylene, vinylidene fluoride and vinyl fluoride, is not contained. A perhalopolymer is generally hard to be bonded to a rubber. According to the constitution of the present invention, however, the interlayer adhesion between the fluororesin layer and the rubber layer is strong, even when the fluororesin layer is a layer composed of a perhalopolymer.

It is preferred that the CTFE copolymer contains a CTFE unit in an amount of 10 to 90 mol% relative to the whole amount of the monomer units.

As the CTFE copolymer, one containing a CTFE unit, a TFE unit and a monomer (α) unit derived from a monomer (α) copolymerizable with these units is particularly preferred.

The "CTFE unit" and the "TFE unit" refer to a CTFE-derived moiety (-CFCl-CF₂-) and a TFE-derived moiety (-CF₂-CF₂-), respectively, located on the molecular structure of the CTFE copolymer, and the "monomer (α) unit" refers to a moiety having the monomer (α) added thereto located on the molecular structure of the CTFE copolymer.

The monomer (α) is not particularly limited, as long as the monomer can copolymerize with CTFE and TFE, and specific examples of the monomer (α) include ethylene (Et), vinylidene fluoride (VdF), a perfluoro(alkyl vinyl ether) (PAVE) represented by the formula: CF₂=CF-ORf¹ (wherein Rf¹ represents a perfluoroalkyl group having 1 to 8 carbon atoms), a vinyl monomer represented by the formula: CX³X⁴=CX⁵(CF₂)ₙX⁶ (wherein X³, X⁴ and X⁵ are the same as or different from one another and independently represent a hydrogen atom or a fluorine atom; X⁶ represents a hydrogen atom, a fluorine atom or a chlorine atom; and n represents an integer of 1 to 10), and an alkyl perfluorovinyl ether derivative represented by the formula: CF₂=CF-OCH₂-Rf² (wherein Rf² represents a perfluoroalkyl group having 1 to 5 carbon atoms). Among these monomers, at least one substance selected from the group consisting of PAVE, the vinyl monomer and the alkyl perfluorovinyl ether derivative is preferred, and at least one substance selected from the group consisting of PAVE and HFP is more preferred.

In the alkyl perfluorovinyl ether derivative, Rf² is preferably a perfluoroalkyl group having 1 to 3 carbon atoms, more preferably CF₂=CF-OCH₂-CF₂CF₃.

In the CTFE copolymer, the content ratio between the CTFE unit and the TFE unit is 15 to 90 mol% of the CTFE unit and 85 to 10 mol% of the TFE unit, more preferably 20 to 90 mol% of the CTFE unit and 80 to 10 mol% of the TFE unit. A CTFE copolymer composed of 15 to 25 mol% of the CTFE unit and 85 to 75 mol% of the TFE unit is more preferred.

In the CTFE copolymer, it is preferred that the total amount of the CTFE unit and the TFE unit is 90 to 99.9 mol% and the amount of the monomer (α) unit is 0.1 to 10 mol%. If the amount of the monomer (α) unit is less than 0.1 mol%, moldability, environmental stress cracking resistance and fuel cracking resistance may be deteriorated. If the amount of the monomer (a) unit is more than 10 mol%, fuel low permeability, heat resistance and mechanical properties may be deteriorated.

The fluorine polymer (b1) is most preferably PCTFE or a CTFE-TFE-PAVE copolymer. The CTFE-TFE-PAVE copolymer is a copolymer substantially composed only of CTFE, TFE and PAVE. In each of PCTFE and the CTFE-TFE-PAVE copolymer, there is no hydrogen atom that directly binds to a carbon atom constituting the main chain, and therefore a dehydrofluorination reaction does not proceed. Therefore, a conventional adhesiveness improving method that utilizes an unsaturated bond formed in a fluorine polymer through a dehydrofluorination reaction cannot be applied.

Specific examples of the PAVE include perfluoro(methyl vinyl ether) (PMVE), perfluoro(ethyl vinyl ether) (PEVE), perfluoro (propyl vinyl ether) (PPVE) and perfluoro (butyl vinyl ether). Among these substances, at least one substance selected from the group consisting of PMVE, PEVE and PPVE is preferred.

The PAVE unit is preferably contained in an amount of 0.5 mol% or more, more preferably 5 mol% or less, relative to the total amount of all of the monomer units.

The constituent unit such as the CTFE unit is a value determined by carrying out a ¹⁹F-NMR analysis.

The fluorine polymer (b1) may be one in which at least one reactive functional group selected from the group consisting of a carbonyl group, a hydroxyl group, a heterocyclic group and an amino group is introduced into a terminal of the main chain and/or a side chain of the polymer.

The term "carbonyl group" as used herein refers to a bivalent carbon group composed of a carbon-oxygen double bond and is typified by -C(=O)-. The reactive functional group containing the carbonyl group is not particularly limited, and includes one in which a carbonyl group is contained as a portion of the chemical structure thereof, such as a carbonate group, a carboxylic acid halide group (a halogenoformyl group), a formyl group, a carboxyl group, an ester bond (-C(=O)O-), an acid anhydride bond (-C(=O)O-C(=O)-), an isocyanate group, an amide group, an imide group (-C(=O)-NH-C(=O)-), a urethane bond (-NH-C(=O)O-), a carbamoyl group (NH₂-C(=O)-), a carbamoyloxy group (NH₂-C(=O)O-), a ureido group (NH₂-C(=O)-NH-) and an oxamoyl group (NH₂-C(=O)-C(=O)-).

In each of the amide group, the imide group, the urethane bond, the carbamoyl group, the carbamoyloxy group, the ureido group, the oxamoyl group and the like, a hydrogen atom bonding to a nitrogen atom may be substituted by a hydrocarbon group such as an alkyl group.

From the viewpoint of the easiness of introduction and the viewpoint that the fluorine polymer (b1) has moderate heat resistance and good adhesion at relatively lower temperatures, the reactive functional group is preferably an amide group, a carbamoyl group, a hydroxyl group, a carboxyl group, a carbonate group, a carboxylic acid halide group or an acid anhydride bond, more preferably an amide group, a carbamoyl group, a hydroxyl group, a carbonate group, a carboxylic acid halide group or an acid anhydride bond.

In the polymer layer to be laminated on the composition for laminates, a known additive, such as a cross-linking agent (a vulcanizing agent), a vulcanization promoter, a stabilizer, a coloring agent, a plasticizer and a reinforcing agent, can be added depending on the intended use.

Typical examples of the embodiment in which the laminate of the present invention is applied to a hose for fuel oils include: a two-layer hose in which a fluorine-containing polymer is arranged as an inner layer of the hose and an epichlorohydrin polymer is arranged as an outer layer; a three-layer hose in which a braided reinforcing layer is arranged on the outside of the two-layer hose; and a four-layer hose in which a rubber layer is arranged on the outside of the three-layer hose. As the braided material to be used in each of the three-layer hose and the four-layer hose, a braided product of a polyester fiber, a polyamide fiber, a glass fiber, a vinylon fiber, cotton or the like is commonly used. As the material for the outermost layer to be used in the four-layer hose, an epichlorohydrin polymer or a synthetic rubber having thermal aging resistance, weather resistance and oil resistance, such as an ethylene-acrylate rubber, a chloroprene rubber, a chlorinated polyethylene rubber and a chlorosulfonated polyethylene is commonly used.

The laminate of the present invention has extremely superior interlayer adhesiveness, and the bonded surface is strong. Therefore, the laminate is extremely effective in use applications where one surface is exposed to an environment for which sour gasoline resistance, gasoline impermeability, alcohol-containing gasoline resistance or the like is required and the other surface is exposed to an environment for which aging resistance, weather resistance, gasoline resistance or the like is required, for example, a fuel hose, a filler hose and the like.

Hereinbelow, typical examples will be described as examples. However, the present invention is not limited to these examples.

### Examples and Comparative Example

Materials shown in Table 1 were kneaded at a blend ratio shown in Table 1 with a kneader and an open roll. In this manner, sheet-like compositions for laminates (i) each having a thickness of 2 to 2.5 mm were produced.

### (Laminates)

Each of the sheets (i) and a low-gas-permeable polymer layer (ii) having a thickness of 0.3 to 0.5 mm were bonded together to produce a bonded body, and then the bonded body was pressurized at 170°C and 20 to 25 kg/cm² for 15 minutes to produce a rubber-resin laminate having a thickness of 2.0 to 2.5 mm.

As the low-gas-permeable polymer layer (ii), a CTFE/TFE/PPVE (21.3/76.3/2.4 (mol%)) copolymer fluororesin was used.

### (Evaluation of Initial Adhesiveness)

Each of the vulcanized laminates was cut into a strip-shaped specimen having a size of 1.0 × 10 cm to produce a test specimen for adhesiveness test use. The test specimen was subjected to a T peel test at 25°C at a tension speed of 50 mm/min, and the peeled state was observed with naked eyes. The results of the peel test are shown in Table 2.

### (Evaluation of Adhesiveness after Thermal Aging Test)

The strip-shaped test specimen for adhesiveness test use was subjected to an aging test in accordance with JIS K 6257 in a gear oven at 125°C for 72 hours, and was then subjected to a T peel test at 25°C at a tension speed of 50 mm/min. The peeled state was observed with naked eyes. The results of the peel test are shown in Table 2.

### (Evaluation of Adhesiveness after Fuel Oil Immersion Test)

The strip-shaped test specimen for adhesiveness test use was immersed in a test fuel C, which was prepared in accordance with JIS K 6258, at 40°C for 72 hours, and was then subjected to a T peel test at 25°C at a tension speed of 50 mm/min. The peeled state was observed with naked eyes. The results of the peel test are shown in Table 2. The test fuel C contained isooctane and toluene at a ratio of 50:50 by volume.

### (Ratings for Peeled State)

⊙: The layers were strongly bonded together and the fracture of the rubber occurred at the interlayer part.
○: The layers were bonded together although the fracture of the material did not occur.
×: The layers were not bonded to any extent, and delamination occurred at the interface.

The compounding materials used in Examples and Comparative Example are shown below.
*1: "EPICHLOMER CG", manufactured by Osaka Soda Co., Ltd.
*2: "Seast SO" manufactured by Tokai Carbon Co., Ltd.
*3: "BURGESS #30" manufactured by Burgess Pigment Company
*4: "ADK CIZER RS-107" manufactured by ADEKA Corporation
*5: "SPLENDER R-300" manufactured by KAO Corporation
*6: "NOCRAC NBC" manufactured by Ouchi Shinko Chemical Industrial Co., Ltd.
*7: "NOCCELER TTCu" manufactured by Ouchi Shinko Chemical Industrial Co., Ltd.
*8: "KYOWAMAG #150", manufactured by Kyowa Chemical Industry Co., Ltd.
*9: "DHT-4A" manufactured by Kyowa Chemical Industry Co., Ltd.
*10: "JER828" manufactured by Mitsubishi Chemical Corporation
*11: "U-CAT SA-1" manufactured by San-Apro Ltd.
*12: "Retarder CTP" manufactured by Ouchi Shinko Chemical Industrial Co., Ltd.
*13: "DAISONET XL21-S" manufactured by Osaka Soda Co., Ltd.
*14: "DAISO DAP MONOMER" manufactured by Osaka Soda Co. , Ltd.

**[Table 1]**

| Compounding (unit: part(s) by weight) | Example 1 | Example 2 | Example 3 | Example 4 | Comparative Example 1 |
|---|---|---|---|---|---|
| Epichlorohydrin polymer *1 | 100 | 100 | 100 | 100 | 100 |
| FEF Carbon *2 (filler) | 50 | 50 | 50 | 50 | 50 |
| Hard clay *3 | 20 | 20 | 20 | 20 | 20 |
| Di(butoxyethoxy)ethyladipate *4 | 10 | 10 | 10 | 10 | 10 |
| Sorbitan monostearate *5 | 3 | 3 | 3 | 3 | 3 |
| Nickel dibutyldithiocarbamate *6 | 1 | 1 | 1 | 1 | 1 |
| Copper dimethyldithiocarbamate *7 | 0.1 | 0.1 | 0.1 | 0.1 | 0.1 |
| Magnesium oxide *8 | 3 | 3 | 3 | 3 | 3 |
| Synthetic hydrotalcite *9 | 3 | 3 | 3 | 3 | 3 |
| Epoxy resin *10 | 1.5 | 1.5 | 1.5 | 1.5 | 1.5 |
| Triallyl isocyanurate | 5 | 3 | 10 | | |
| Diallyl orthophthalate *14 | | | | 5 | |
| DBU phenol salt *11 | 1 | 1 | 1 | 1 | 1 |
| Magnesium sulfate decahydrate | 5 | 5 | 5 | 5 | 5 |
| N-Cyclohexylthiophthalimide *12 | 1 | 1 | 1 | 1 | 1 |
| Quinoxaline-type vulcanizing agent *13 | 1.7 | 1.7 | 1.7 | 1.7 | 1.7 |

**[Table 2]**

| | Example 1 | Example 2 | Example 3 | Example 4 | Comparative Example 1 |
|---|---|---|---|---|---|
| Initial | ⊙ | ⊙ | ⊙ | ⊙ | ⊙ |
| After thermal aging test (125°C, 72 hr) | ⊙ | ⊙ | ⊙ | ⊙ | ⊙ |
| After immersion in fuel oil (40°C, 72 hr) | ⊙ | ○ | ⊙ | ○ | × |

As shown in Table 2, in laminates produced using the compositions for laminates of Examples, strong adhesiveness was confirmed in all of the initial adhesiveness evaluation, the evaluation of adhesiveness after thermal aging test and the evaluation of adhesiveness after immersion in fuel oil. In a laminate produced using the composition for laminates of Comparative Example, on the other hand, sufficient adhesiveness was not confirmed in the evaluation of adhesiveness after immersion in fuel oil.

### INDUSTRIAL APPLICABILITY

The present invention can provide a composition for laminates, which has such a property that a cured product of the composition has excellent adhesiveness to another substance (e.g., another polymer). The composition can be used in a laminate with, for example, a fluorine-containing polymer and the like.

## Claims

1. A composition for laminates, comprising: (a) an epichlorohydrin polymer; (b) a compound having a vinyl group; (c) at least one compound selected from the group consisting of a 1,8-diazabicyclo(5.4.0)undecene-7 salt, a 1,5-diazabicyclo(4.3.0)-nonene-5 salt, 1,8-diazabicyclo(5.4.0)undecene-7 and 1, 5-diazabicyclo(4.3.0)-nonene-5; and (d) a metal salt hydrate, wherein the metal salt hydrate (d) is a hydrate of an acetic acid salt or a sulfuric acid salt of a metal selected from aluminum, sodium, calcium, zinc, manganese, lanthanum, titanium, zirconium, iron, cobalt, nickel, magnesium and copper.

2. The composition for laminates according to claim 1, wherein the compound (b) has at least two vinyl groups in the molecule.

3. The composition for laminates according to claim 1 or 2, wherein the content of the compound (d) is 0.1 to 10 parts by weight relative to 100 parts by weight of the epichlorohydrin polymer (a).

4. The composition for laminates according to any one of claims 1 to 3, further containing an epoxy resin (e).

5. The composition for laminates according to any one of claims 1 to 4, further containing a copper salt (f).

6. The composition for laminates according to any one of claims 1 to 5, further containing a vulcanizing agent (g).

7. The composition for laminates according to claim 6, wherein the vulcanizing agent (g) comprises at least one vulcanizing agent selected from a quinoxaline-type vulcanizing agent, a thiourea-type vulcanizing agent, a mercaptotriazine-type vulcanizing agent, a bisphenol-type vulcanizing agent, a sulfur-containing vulcanizing agent and a peroxide-type vulcanizing agent.

8. The composition for laminates according to any one of claims 1 to 7, wherein the content of the compound (c) is 0.3 to 3.0 parts by weight relative to 100 parts by weight of the epichlorohydrin polymer.

9. A laminate produced using a composition for laminates as recited in any one of claims 1 to 8.

10. A tube or hose comprising a laminate as recited in claim 9.

11. An automotive fuel pipeline comprising a tube or hose as recited in claim 10.

## Patentansprüche

1. Zusammensetzung für Laminate, umfassend: (a) ein Epichlorhydrinpolymer, (b) eine Verbindung, die eine Vinylgruppe aufweist, (c) mindestens eine Verbindung, die aus der Gruppe ausgewählt ist, bestehend aus einem 1,8-Diazabicyclo(5.4.0)undecen-7-salz, einem 1,5-Diazabicyclo(4.3.0)-nonen-5-salz, 1,8-Diazabicyclo(5.4.0)undecen-7 und 1,5-Diazabicyclo(4.3.0)-nonen-5; und (d) ein Metallsalzhydrat, wobei das Metallsalzhydrat (d) ein Hydrat eines Essigsäuresalzes oder eines Schwefelsäuresalzes eines Metalls ist, das aus Aluminium, Natrium, Calcium, Zink, Mangan, Lanthan, Titan, Zirconium, Eisen, Cobalt, Nickel, Magnesium und Kupfer ausgewählt ist.

2. Zusammensetzung für Laminate nach Anspruch 1, wobei die Verbindung (b) mindestens zwei Vinylgruppen in dem Molekül aufweist.

3. Zusammensetzung für Laminate nach Anspruch 1 oder 2, wobei der Gehalt der Verbindung (d) 0,1 bis 10 Gewichtsteilen in Bezug auf 100 Gewichtsteile des Epichlorhydrinpolymers (a) entspricht.

4. Zusammensetzung für Laminate nach einem der Ansprüche 1 bis 3, die ferner ein Epoxidharz (e) enthält.

5. Zusammensetzung für Laminate nach einem der Ansprüche 1 bis 4, die ferner ein Kupfersalz (f) enthält.

6. Zusammensetzung für Laminate nach einem der Ansprüche 1 bis 5, die ferner ein Vulkanisiermittel (g) enthält.

7. Zusammensetzung für Laminate nach Anspruch 6, wobei das Vulkanisiermittel (g) mindestens ein Vulkanisiermittel umfasst, das aus einem Vulkanisiermittel vom Chinoxalintyp, einem Vulkanisiermittel vom Thioharnstofftyp, einem Vulkanisiermittel vom Mercaptotriazintyp, einem Vulkanisiermittel vom Bisphenoltyp, einem schwefelhaltigen Vulkanisiermittel und einem Vulkanisiermittel vom Peroxidtyp ausgewählt ist.

8. Zusammensetzung für Laminate nach einem der Ansprüche 1 bis 7, wobei der Gehalt der Verbindung (c) 0,3 bis 3,0 Gewichtsteilen in Bezug auf 100 Gewichtsteile des Epichlorhydrinpolymers entspricht.

9. Laminat, das unter Verwendung einer Zusammensetzung für Laminate nach einem der Ansprüche 1 bis 8 hergestellt wird.

10. Röhre oder Schlauch, umfassend ein Laminat nach Anspruch 9.

11. Automobil-Kraftstoffleitung, umfassend eine Röhre oder einen Schlauch nach Anspruch 10.

## Revendications

1. Composition pour stratifiés, comprenant :
(a) un polymère d'épichlorohydrine ;
(b) un composé présentant un groupe vinyle ;
(c) au moins un composé choisi dans le groupe consistant en un sel de 1,8-diazabicyclo(5.4.0)undécène-7, un sel de 1,5-diazabicyclo(4.3.0)-nonène-5, le 1,8-diazabicyclo(5.4.0)undécène-7 et le 1,5-diazabicyclo(4.3.0)-nonène-5 ; et
(d) un hydrate de sel de métal,
dans laquelle l'hydrate de sel de métal (d) est un hydrate d'un sel d'acide acétique ou d'un sel d'acide sulfurique d'un métal choisi parmi l'aluminium, sodium, calcium, zinc, manganèse, lanthane, titane, zirconium, fer, cobalt, nickel, magnésium et cuivre.

2. Composition pour stratifiés selon la revendication 1, dans laquelle le composé (b) présente au moins deux groupes vinyle dans la molécule.

3. Composition pour stratifiés selon la revendication 1 ou 2, dans laquelle la teneur du composé (d) est de 0,1 à 10 parties en masse par rapport à 100 parties en masse du polymère d'épichlorohydrine (a).

4. Composition pour stratifiés selon l'une quelconque des revendications 1 à 3, contenant de plus une résine époxy (e).

5. Composition pour stratifiés selon l'une quelconque des revendications 1 à 4, contenant de plus un sel de cuivre (f).

6. Composition pour stratifiés selon l'une quelconque des revendications 1 à 5, contenant de plus un agent de vulcanisation (g).

7. Composition pour stratifiés selon la revendication 6, dans laquelle l'agent de vulcanisation (g) comprend au moins un agent de vulcanisation choisi parmi un agent de vulcanisation de type quinoxaline, un agent de vulcanisation de type thio-urée, un agent de vulcanisation de type mercaptotriazine, un agent de vulcanisation de type bisphénol, un agent de vulcanisation contenant du soufre et un agent de vulcanisation de type peroxyde.

8. Composition pour stratifiés selon l'une quelconque des revendications 1 à 7, dans laquelle la teneur du composé (c) est de 0,3 à 3,0 parties en masse par rapport à 100 parties en masse du polymère d'épichlorohydrine.

9. Stratifié produit en utilisant une composition pour stratifiés selon l'une quelconque des revendications 1 à 8.

10. Tube ou flexible comprenant un stratifié selon la revendication 9.

11. Pipeline de carburant automobile comprenant un tube ou flexible selon la revendication 10.
